# EUROPEAN PATENT SPECIFICATION

(11) **EP 3 719 350 B1**
(45) Date of publication and mention of the grant of the patent: **09.03.2022**
(21) Application number: 20165784.8
(22) Date of filing: 26.03.2020
(51) Int. Cl.: F16H 3/00, F16H 61/02, F16H 61/04, F16H 61/688, F16D 48/02

(54) **DUAL-CLUTCH ACTUATOR AND DRIVE ASSEMBLY HAVING SUCH AN ACTUATOR**
DOPPELKUPPLUNGS-AKTUATOR UND ANTRIEBSBAUGRUPPE MIT EINEM SOLCHEN AKTUATOR
ACTIONNEUR À DOUBLE EMBRAYAGE ET ENSEMBLE D'ENTRAÎNEMENT COMPORTANT UN TEL ACTIONNEUR

(30) Priority: 04.04.2019 DE 102019108875
(43) Date of publication of application: 07.10.2020
(73) Proprietor: FTE automotive GmbH, 96106 Ebern (DE)
(72) Inventor: HEUBNER, Wilhelm, 96106 Ebern (DE)
(74) Representative: Valeo Powertrain Systems

(56) References cited:
- WO-A1-2016/150411
- CN-U- 202 007 868
- DE-A1-102005 012 261
- DE-A1-102015 202 581
- DE-T5-112011 100 466

## Description

The invention relates to a dual-clutch actuator and a drive assembly for a vehicle axle of a motor vehicle having an electric motor, a gearbox with an input which is connected to the electric motor, a first and a second gear and an output shaft, a dual clutch which is arranged between the electric motor and the input of the gearbox, and a synchronization assembly which is arranged between the first gear and the output of the gearbox.

It is possible in principle for a drive assembly of this kind (also referred to in short as an "E-axle") to be configured with only one gear and without a clutch in the torque transmission path from the electric motor to the wheels. However, in order to combine a high acceleration capability with a simultaneously high maximum speed, it is known in the art for a gearbox with two or also more gears to be used so that a greater gear reduction can be used when starting up and a lower gear reduction at high speeds. By suitably actuating the dual clutch, shifting operations are possible which run without interrupting the traction.

In order to keep the torque to be transmitted by the clutches as low as possible, the dual clutch is customarily arranged on the input side of the gearbox. Consequently, there are two input shafts and a joint output shaft. The synchronization assembly allows the force flow between the output of the gearbox and the input shaft for the first gear to be separated when the torque is transmitted via the second gear. Without the synchronization assembly, the input shaft of the first gear would be carried along at a speed which would run more quickly than the second input shaft according to the difference between the reduction ratios of the two gears.

Different dual-clutch actuators are known in the art, with which the dual clutch and also the synchronization assembly can be shifted in the desired manner. An example can be found in DE 10 2015 214 998 A1.

The publication DE 10 2015 202 581 A1 with reference to figure 9 and the publication DE 11 2011 100 466 T5 disclose an actuation assembly for a dual clutch system and at least a transmission actuator including a pump for actuating the dual clutch system or transmission actuator.

The problem addressed by the invention is that of creating a dual-clutch actuator which is characterized by a more compact design. Furthermore, a compact drive assembly is to be created for a vehicle axle of an electric vehicle.

In order to solve this problem, a dual-clutch actuator with a hydraulic pump is provided according to the invention, with a first clutch hydraulic circuit, a second clutch hydraulic circuit, wherein the first clutch hydraulic circuit has a control valve, wherein the second clutch hydraulic circuit is connected to the hydraulic pump and in turn has a control valve, the dual clutch actuator further comprises a first shift hydraulic circuit, wherein the shift hydraulic circuit is connected to the hydraulic pump and has a control valve which has a return connection, wherein the first clutch hydraulic circuit is connected to the return connection of the control valve of the shift hydraulic circuit. In order to solve the aforementioned problem, a drive assembly of the kind referred to above is also provided which has an actuator of the kind referred to above, wherein the first shift hydraulic circuit is coupled to the synchronization assembly of the first gear.

The invention is based on the knowledge that the shift hydraulic circuit need not be completely self-contained in design, but may be configured as a branch upstream of the first clutch hydraulic circuit. In other words, the control valve for the synchronization assembly and the control valve for the first clutch hydraulic circuit are arranged in a cascade-like manner. Due to the sequence customarily occurring during operation, the hydraulic circuit for the first clutch can be fed from the return connection of the control valve of the shift hydraulic circuit upon actuation of the synchronization assembly and the first clutch. A very simple design is thereby produced overall which is compact and requires few components.

According to an embodiment of the invention it is provided that the second clutch hydraulic circuit is directly connected to the hydraulic pump. A simple design of this kind is particularly advantageous when no synchronization assembly is provided for the second gear which means that this always co-rotates.

According to an alternative embodiment of the invention, a second shift hydraulic circuit is provided which is connected to the hydraulic pump, wherein the second clutch hydraulic circuit is connected to a return connection of a control valve with which the pressure in the second shift hydraulic circuit is controlled. This actuator is advantageous when a second synchronization assembly is provided which is arranged between the second gear and the output of the gearbox. With the second synchronization assembly, the input shaft of the second gear can be uncoupled from the output of the gearbox, so that the input shaft is not carried along when the first gear is active. This produces lower drag torques for the gearbox. Alternatively, a parking lock actuator can also be connected to the second shift hydraulic circuit, in order to allow an operating method in which only the clutch is connected to the first gear and then only the parking lock is opened.

According to one embodiment, a pressure sensor is provided for the shift hydraulic circuit, wherein the clutch hydraulic circuit connected to the return connection of the corresponding control valve does not have its own pressure sensor. This cost-effective embodiment is based on the knowledge that control and regulation of the pressure in the hydraulic circuit is always implemented for the corresponding clutch when the control valve for the shift hydraulic circuit is completely open. Consequently, the pressure in the hydraulic circuit of this clutch corresponds to the pressure which is detected by the pressure sensor of the shift hydraulic circuit.

An actuator of the synchronization assembly preferably comprises a mechanical stop for receiving a supporting force at operating pressure. Since the actuator of the synchronization assembly is exposed to the pressure which is necessary in order to actuate the clutch, it is not out of the question that in the meantime pressures are applied to said actuator which are higher than the operating pressures actually required for opening and closing. The mechanical stop allows the forces resulting from the higher pressures to be easily supported.

So that the pressure in the corresponding clutch hydraulic circuit can be controlled or regulated even more effectively in the case of highly dynamic control and regulation actions, a pressure sensor can also be provided for the clutch hydraulic circuit connected to the return connection of the control valve.

According to a preferred embodiment, a reservoir is integrated in the dual-clutch actuator, which reservoir is divided into two partial volumes by means of a partition wall, wherein the hydraulic pump has two inputs and the return connection of the control valve of the first clutch hydraulic circuit leads into the partial volume, from which the hydraulic pump draws to supply the second clutch hydraulic circuit. The division increases functional reliability, since in the event of a leak in one of the circuits, the hydraulic fluid available to the other circuit is not affected. The vehicle therefore continues to be functional in principle, even if only one of the two gears can be used.

According to one embodiment of the invention, a parking lock is integrated which is connected to the shift hydraulic circuit. In this way, the parking lock can be unlocked without a separate actuator being required for this.

According to a preferred embodiment, a parking lock is integrated in the drive assembly which is connected to the shift hydraulic circuit to which the synchronization assembly of the first gear is also simultaneously connected. Since the parking lock is initially released when starting up the vehicle and the synchronization assembly of the first gear also has to be actuated, a separate hydraulic circuit is not needed in order to release the parking lock, but instead the parking lock can be actuated in parallel with the synchronization assembly of the first gear. This leads to a further reduction in constructional outlay.

If a limited locking differential is integrated in the drive assembly, this can easily be actuated by means of the actuator by connecting a locking differential hydraulic circuit with a control valve to the return connection of the control valve of the first clutch hydraulic circuit. This allows, without further costly construction, the oil flow required for actuation of the locking differential (more accurately for impact on the friction linings producing a locking moment) to be taken from the return movement of the first control valve.

The invention is described below with the help of different embodiments which are depicted in the attached drawings. In the drawings:
- Figure 1 shows a schematic representation of a drive assembly according to the invention;
- Figure 2 shows a perspective view of a drive assembly according to the invention;
- Figure 3 shows the hydraulic circuit diagram of an inventive dual-clutch actuator according to a first embodiment;
- Figure 4 shows the pressure profile in the shift hydraulic circuit and the first clutch hydraulic circuit when starting;
- Figure 5 shows the pressure profile in the shift hydraulic circuit and the two dual hydraulic circuits when shifting from second gear to first gear;
- Figure 6 shows the hydraulic circuit diagram of a dual-clutch actuator according to a second embodiment of the invention;
- Figure 7 shows the hydraulic circuit diagram of a dual-clutch actuator according to a third embodiment of the invention; and
- Figure 8 shows the hydraulic circuit diagram of a dual-clutch actuator according to a fourth embodiment of the invention.

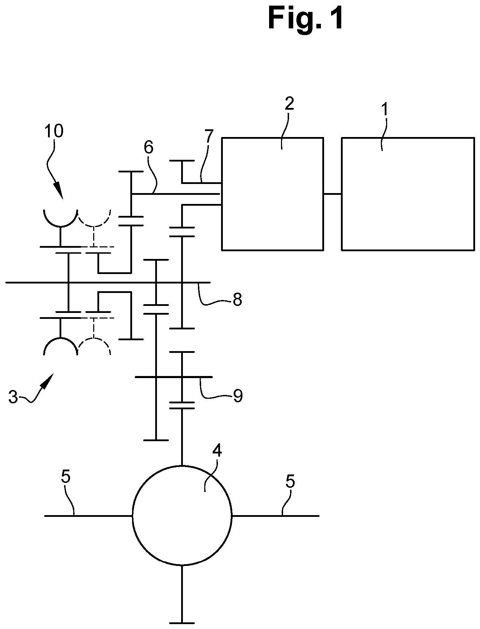

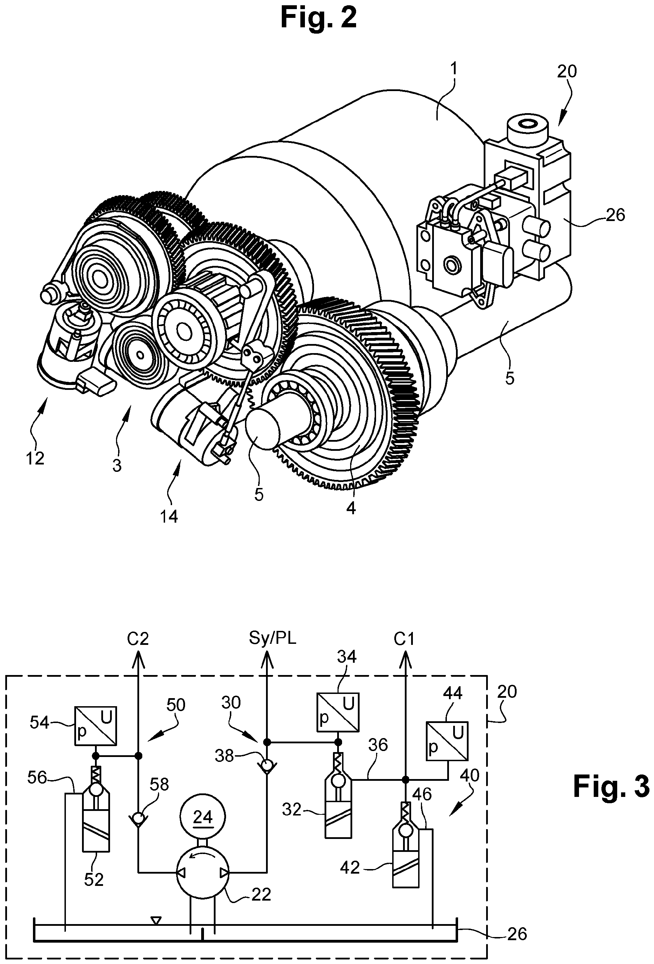

A drive assembly for a vehicle axle of a motor vehicle is shown in Figures 1 and 2.

It comprises an electric motor 1, the drive output of which can be transmitted via a dual clutch 2 to a gearbox generally denoted as 3, at the output of which a differential gearbox 4 is arranged.

The two clutches of the dual clutch 2 are hydraulically actuated, for example by hydraulic slave cylinders. The clutches are designed in such a manner that they are normally disengaged so that when there is no hydraulic pressure present, no torque is transmitted from them.

The drive output is transmitted from the differential gearbox 4 via two output shafts 5 to the two driven wheels of a vehicle axle. If desired, a differential lock can be integrated in the differential gearbox 4.

The gearbox 3 comprises two gears which are connected to the dual clutch 2 via a first input shaft 6 and a second input shaft 7. The torque can therefore be transmitted via an intermediate shaft 8 and a further reduction stage 9 independently of the shifting state of the dual clutch 2 via the first gear or the second gear to the differential gearbox 4.

The gearwheel of the first gear stage on the output side is coupled via a synchronization assembly 10 to the intermediate shaft 8. In the state of the synchronization assembly 10 shown by solid lines in Figure 1, the torque flow for the first gear is interrupted; the gearwheel on the output side of the first gear stage is arranged in a freely rotatable manner on the intermediate shaft 8. If the differential gearbox 4 is driven via the second gear stage by the electric motor 1, the first gear stage need not therefore be carried along. In particular, the gearwheel on the input side of the first gear stage and the plates of the clutch on the output side are thereby prevented from being driven and carried along at a speed which is substantially higher than the input speed of the second input shaft 7 in this state.

In the state of the synchronization assembly 10 shown using dotted lines in Figure 1, the gearwheel of the first gear stage on the output side is coupled non-rotatably to the intermediate shaft 8, so that torque transmission via the first gear is possible.

The synchronization assembly 10 may have a similar design to the synchronization assemblies in the case of multi-gear, manual shift vehicle gearboxes or in the case of dual clutch gearboxes. It may therefore comprise a friction lining, which assimilates the speeds of the intermediate shaft 8 and the gearwheel of the first gear stage on the output side before a shifting operation, and a sliding sleeve, which can be changed through so that the non-rotatable connection is created between the intermediate shaft 8 and the gearwheel on the output side. An actuator 12 used for actuation of the sliding sleeve is shown in Figure 1.

The actuator 12 is hydraulically actuated. For this purpose, the actuator may be configured as a hydraulic positioning cylinder. The actuator 12 is normally open, wherein the synchronization assembly 10 is moved into the open position by a spring. In other words, if no pressure is applied, the output gearwheel of the first gear is freely rotatable on the intermediate shaft 8.

The drive assembly further comprises a parking lock which is used to block the drive axle mechanically. In this case, said parking lock is assigned to the shaft of the reduction stage 9.

The parking lock 14 has a hydraulic slave cylinder provided with a spring as the actuator, so that it is normally closed. The slave cylinder may be locked in both positions, so in the open and in the closed position, by means of a solenoid valve.

A dual-clutch actuator 20 which is used to actuate the two clutches of the dual clutch 2 and also the synchronization assembly 10 and the parking lock 14 is also shown in Figure 2.

The design of the dual-clutch actuator 20 is explained in greater detail below with reference to Figure 3.

It comprises a hydraulic pump 22 which is driven by an electric motor 24.

The hydraulic pump 22 in this case has two inputs which draw from partial volumes of a reservoir 26 which are structurally separate from one another.

A shift hydraulic circuit 30 is connected to an output of the hydraulic pump, to which the actuator 12 of the synchronization assembly 10 and an actuator of the parking lock 14 are connected. The pressure in the hydraulic circuit 30 is controlled or regulated by a control valve 32 which is configured as a proportional valve. By means of a pressure sensor 34, the pressure in the shift hydraulic circuit 30 can be detected and controlled or regulated by suitable actuation of the control valve 32. To this end, the connection between an input of the control valve 32 and a return connection 36 is suitably opened or closed, so that the pressure supplied by the hydraulic pump 22 can be stored in the desired way in the shift hydraulic circuit 30.

The return connection 36 of the control valve 32 of the shift hydraulic circuit 30 supplies a first clutch hydraulic circuit 40 which is provided for actuation of the clutch of the dual clutch 2 assigned to the first gear of the gearbox 3. The first clutch hydraulic circuit 40 has a control valve 42 which is likewise configured as a proportional valve in this case. By means of a pressure sensor 44, the pressure in the first clutch hydraulic circuit 40 can be detected and controlled or regulated by suitable actuation of the control valve 42. A return connection 46 of the control valve 42 leads into the partial volume of the reservoir 26 from which the hydraulic pump 22 draws to supply the shift hydraulic circuit 30 and also the first clutch hydraulic circuit 40.

The first clutch hydraulic circuit 40 in this case does not have its own pressure sensor, but the control valve 42 can be actuated based on the signals from the pressure sensor 34 which is assigned to the shift hydraulic circuit 30. However, it is easily possible for a further pressure sensor to be provided in the first clutch hydraulic circuit 40 too, in case this is desired for highly dynamic actuation processes, for example.

The hydraulic pump 22 has a second pressure outlet to which a second clutch hydraulic circuit 50 is connected. This is used to actuate the clutch of the dual clutch 2 which is assigned to the drive shaft 7 of the gearbox 3, in other words, the second gear.

The second clutch hydraulic circuit 50 has a control valve 52 which is likewise configured as a proportional valve in this case. Furthermore, a pressure sensor 54 is provided which detects the pressure in the second clutch hydraulic circuit 50, so that the control valve 52 can be actuated in the desired manner.

A return connection 56 of the second control valve 52 leads into the partial volume of the reservoir 26 from which the hydraulic pump 22 draws to supply the second clutch hydraulic circuit 50.

A non-return valve 38 or 58 is arranged between the pressure outlet of the hydraulic pump 22 and the branch to the control valve 32 or 52 in each case, so that by closing the corresponding control valve 32 or 52 the hydraulic pressure in the corresponding hydraulic circuit can be maintained without the hydraulic pump 22 having to be operated.

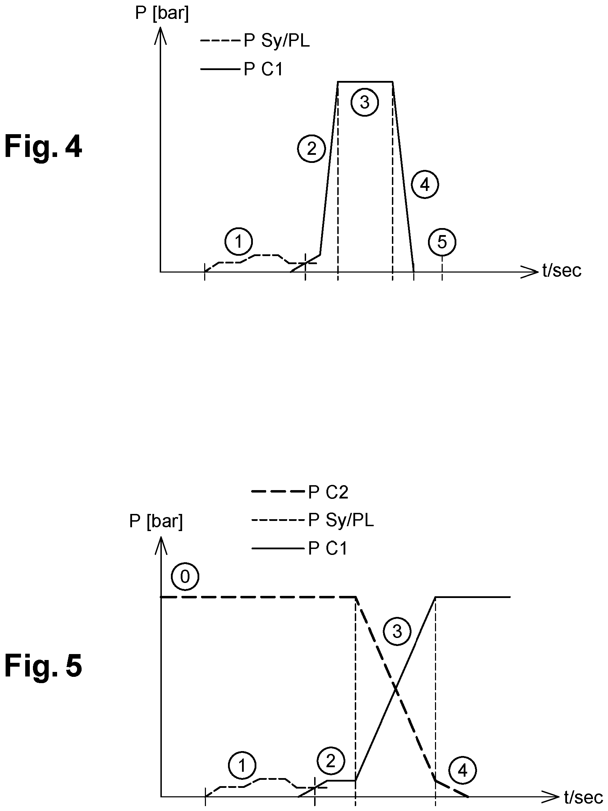

With the help of Figure 4, an explanation is provided below as to how the components of the drive assembly are actuated when the corresponding vehicle is to set off.

If the vehicle is to set off, the hydraulic pump 22 is switched on initially so that hydraulic pressure is present at both pressure outlets.

In a phase 1, a pressure is produced by suitable actuation of the control valve 32 at the output of the shift hydraulic circuit 30 such that the normally open synchronization assembly 10 is closed, so that the first gear is engaged and, moreover, the parking lock 14 is released. When the parking lock 14 is released, it is locked in the open state by interrupting the power supply of a normally closed latching magnet pretensioned with a spring.

As soon as the first gear is engaged and the parking lock is released, the control valve 42 of the first clutch hydraulic circuit 40 can be actuated in such a manner that the pump pressure accumulates, so that the clutch of the dual clutch 2 assigned to the first gear is engaged. As soon as the pressure in the first clutch hydraulic circuit 40 is greater in this case than the pressure in the shift hydraulic circuit 30 which is necessary in order to engage the first gear and release the parking lock, the control valve 32 can be completely opened, so that the pressure is controlled or regulated both in the shift hydraulic circuit 30 and also in the first clutch hydraulic circuit 40 simply by the control valve 42.

As soon as the clutch assigned to the first gear is engaged with the desired force, the vehicle can be started electrically (phase 3). As long as the vehicle travels electrically in the same gear (in first gear in the hypothetical example), the hydraulic pump 22 can be switched off once the control valve 42 has been closed; the hydraulic pressure is then maintained on account of the non-return valve 38.

If the vehicle is switched off, the control valve 42 can be opened, so that the pressure drops both in the first clutch hydraulic circuit 40 and also in the shift hydraulic circuit 30. In this way, the synchronization assembly 10 is once again reset into the open state and by opening the solenoid valves of the parking lock 14 this is reset in the locked state.

Figure 5 shows actuation of the different components of the drive assembly during the changeover from the second to the first gear.

If the vehicle drives in second gear, the actuator of the second clutch of the dual clutch 2 is closed. The pressure necessary for this was supplied by the hydraulic pump 22 which can be switched off afterwards when the control valve 52 is closed. The pressure therefore remains at a constant level (phase 0).

In order to be able to shift back into first gear, the hydraulic pump 22 is switched on, so that an oil flow is available at both pressure outlets. By means of the control valve 32, the pressure in the shift hydraulic circuit 30 is then increased (phase 1), so that the actuator 12 of the synchronization assembly 10 is triggered. In this way, the speeds of the output gearwheel of the first gear and of the intermediate shaft 8 are synchronized and the sliding sleeve is finally changed through, so that a non-rotatable connection between the output gearwheel of the first gearbox stage and the intermediate shaft 8 is retained. The pressure in the first clutch hydraulic circuit 40 is furthermore close to zero in this phase, since the control valve 42 is completely open.

If the sliding sleeve is changed through, the slave cylinder of the actuator 12 of the synchronization assembly 10 is located at a mechanical stop, so that a further increase in pressure in the shift hydraulic circuit 30 has no effect.

The pressure in the first clutch hydraulic circuit 40 is subsequently increased by means of the control valve 42 until the clutch of the dual clutch 2 assigned to the first gear reaches the so-called kiss point, in other words it starts to transmit torque (phase 2).

The pressure in the first clutch hydraulic circuit 40 is subsequently increased, while the pressure in the second clutch hydraulic circuit 50 is reduced in the opposite direction (phase 3), so that the torque transmission is switched in a fluent manner from second gear to first gear.

Subsequently (phase 4), the control valve 52 may be completely opened in the second clutch hydraulic circuit 50, while the pressure in the first clutch hydraulic circuit 40 is held at a constantly high level by the non-return valve 38 and the closed control valve 42.

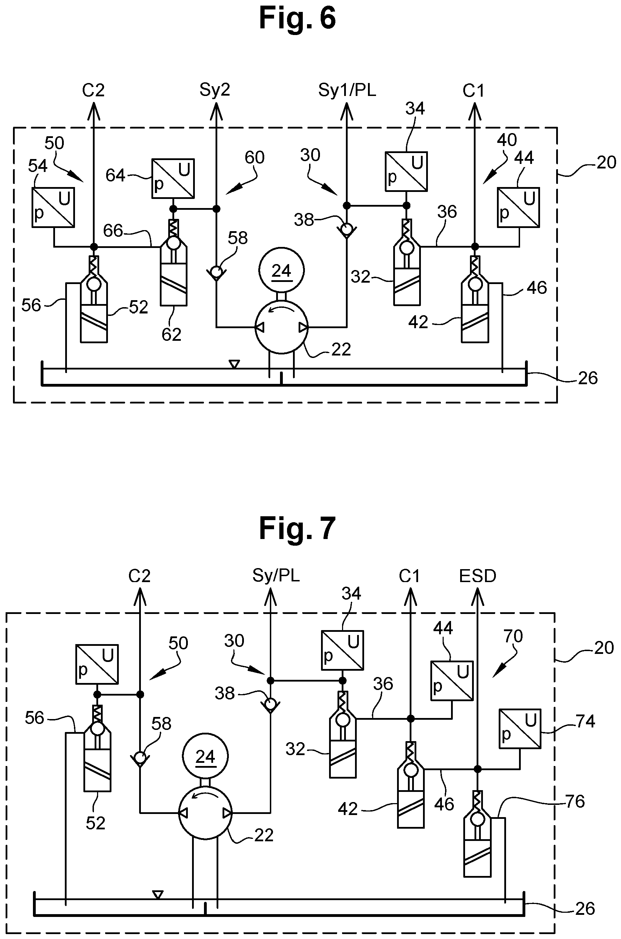

A dual-clutch actuator 20 according to a second embodiment is shown in Figure 6. The same reference numbers are used for the components known from the first embodiment and to this extent reference is made to the above explanations.

The difference between the first and the second embodiment is that in the second embodiment a further shift hydraulic circuit is provided which is designated using the reference number 60 in this case. This shift hydraulic circuit is used to actuate a second synchronization assembly which is assigned to the second gear of the gearbox 3.

As a mirror image of the arrangement of the shift hydraulic circuit 30 and the first clutch hydraulic circuit 40, the shift hydraulic circuit 60 is arranged upstream of the second clutch hydraulic circuit 50. The second clutch hydraulic circuit 50 is therefore connected to a return connection 66 of a control valve 62 of the shift hydraulic circuit 60.

The pressure signal for actuating the control valve 52 of the second clutch hydraulic circuit 50 originates in this case from a pressure sensor 64 which is arranged in the second shift hydraulic circuit 60.

Figure 7 shows an actuator according to a third embodiment. The same reference numbers are used for the components known from the preceding embodiments and reference is made to this extent to the above explanations.

The actuator 20 of the third embodiment essentially corresponds to that of the first embodiment. However, it contains in addition a locking differential hydraulic circuit 70 with a control valve 72 and a pressure sensor 74, so that the oil flow and oil pressure at an outlet ESD can be regulated in a desired manner.

The locking differential hydraulic circuit 70 is supplied by the return connection 46 of the control valve 42 of the first clutch hydraulic circuit 40, so that it is connected thereto in a cascading manner. Consequently, when the corresponding vehicle travels in first gear and the first control valve 42 is open, a locking differential is actuated.

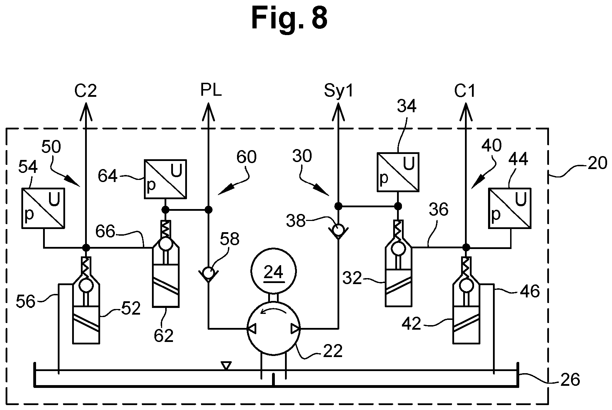

A dual-clutch actuator 20 according to a fourth embodiment is shown in Figure 8. The same reference numbers are used for the components known from the aforementioned embodiments and reference is made to the above explanations in this respect.

The difference between the fourth and the second embodiment is that in the case off the fourth embodiment a parking lock actuator rather than a second synchronization assembly is connected to the outlet of the second shift hydraulic circuit 60. This allows the parking lock actuator to be operated independently of the synchronization assembly which is attached to the first shift hydraulic circuit 30. In particular, the drive train can then be closed via the first gear before the parking lock is released.

## Claims

1. Dual-clutch actuator (20) with a hydraulic pump (22), a first clutch hydraulic circuit (40), a second clutch hydraulic circuit (50), wherein the first clutch hydraulic circuit (40) has a control valve (42), wherein the second clutch hydraulic circuit (50) is connected to the hydraulic pump (22) and in turn has a control valve (52), **characterized in that** the dual-clutch actuator (20) further comprises a first shift hydraulic circuit (30), wherein the first shift hydraulic circuit (30) is connected to the hydraulic pump (22) and has a control valve (32) which has a return connection (36), wherein the first clutch hydraulic circuit (40) is connected to the return connection (36) of the control valve (32) of the first shift hydraulic circuit (30).

2. Dual-clutch actuator (20) according to claim 1, **characterized in that** the second clutch hydraulic circuit (50) is directly connected to the hydraulic pump (22).

3. Dual-clutch actuator (20) according to claim 1, **characterized in that** a second shift hydraulic circuit (60) is provided which is connected to the hydraulic pump (22) and that the second clutch hydraulic circuit (50) is connected to a return connection (66) of a control valve (62) of the second shift hydraulic circuit (60) with which the pressure in the second shift hydraulic circuit (60) is controlled.

4. Dual-clutch actuator (20) according to claim 3, **characterized in that** a pressure sensor (34, 64) is provided for each of the first and second shift hydraulic circuits (30, 60) and the first and second clutch hydraulic circuits (40, 50) connected to the return connection (36, 66) of the control valves (32, 62) of the first and second hydraulic circuits (40, 50) do not have its own pressure sensor.

5. Dual-clutch actuator (20) according to claim 3, **characterized in that** a pressure sensor (34, 64) is provided for each of the first and second shift hydraulic circuits (30, 60) and a pressure sensor (44, 54) is also provided for each of the first and second clutch hydraulic circuits (40, 50) connected to the return connection (36, 66) of the control valves (32, 62) of the first and second shift hydraulic circuits (30, 60).

6. Dual-clutch actuator (20) according to one of the preceding claims, **characterized in that** a reservoir (26) is integrated which is divided into two partial volumes by means of a partition wall, wherein the hydraulic pump (22) has two inputs and the return connection (46) of the control valve (42) of the first clutch hydraulic circuit (40) leads into the partial volume from which the hydraulic pump (22) draws to supply the first clutch hydraulic circuit (40) and the return connection (56) of the control valve (52) of the second clutch hydraulic circuit (50) leads into the partial volume from which the hydraulic pump (22) draws to supply the second clutch hydraulic circuit (50).

7. Dual-clutch actuator (20) according to one of the preceding claims, **characterized in that** a locking differential hydraulic circuit (70) with a control valve (72) is connected to the return connection (46) of the control valve (42) of the first clutch hydraulic circuit (40).

8. Drive assembly for a vehicle axle of a motor vehicle having an electric motor (1), a gearbox (3) with an input which is connected to the electric motor (1), a first and a second gear and an output shaft, a dual clutch (2) which is arranged between the electric motor (1) and the input of the gearbox (3), a synchronization assembly (10) which is arranged between the first gear and the output of the gearbox (3) and a dual-clutch actuator (20) according to one of the preceding claims, wherein the first shift hydraulic circuit (30) is coupled with the synchronization assembly (10) of the first gear.

9. Drive assembly according to claim 8, **characterized in that** a second synchronization assembly is provided which is arranged between the second gear and the output of the gearbox.

10. Drive assembly according to one of claims 8 and 9, **characterized in that** an actuator (12) of the synchronization assembly has a mechanical stop for receiving a supporting force at operating pressure.

11. Drive assembly according to one of claims 8 to 10, **characterized in that** a parking lock (14) is integrated which is connected to the shift hydraulic circuit (30, 60).

12. Drive assembly according to one of claims 8 to 10, **characterized in that** a parking lock (14) is integrated which is connected to the first shift hydraulic circuit (30) to which the synchronization assembly (10) of the first gear is also simultaneously connected.

13. Drive assembly according to one of claims 8 to 12, **characterized in that** a locking differential is provided which can be actuated by a locking differential hydraulic circuit (70) which is integrated in the actuator (20).

## Patentansprüche

1. Doppelkupplungsaktuator (20) mit einer Hydraulikpumpe (22), einem ersten Kupplungshydraulikkreis (40), einem zweiten Kupplungshydraulikkreis (50), wobei der erste Kupplungshydraulikkreis (40) ein Steuerventil (42) aufweist, wobei der zweite Kupplungshydraulikkreis (50) mit der Hydraulikpumpe (22) verbunden ist und wiederum ein Steuerventil (52) aufweist, **dadurch gekennzeichnet, dass** der Doppelkupplungsaktuator (20) ferner einen ersten Schalthydraulikkreis (30) umfasst, wobei der erste Schalthydraulikkreis (30) mit der Hydraulikpumpe (22) verbunden ist und ein Steuerventil (32) aufweist, das eine Rücklaufverbindung (36) aufweist, wobei der erste Kupplungshydraulikkreis (40) mit der Rücklaufverbindung (36) des Steuerventils (32) des ersten Schalthydraulikkreises (30) verbunden ist.

2. Doppelkupplungsaktuator (20) nach Anspruch 1, **dadurch gekennzeichnet, dass** der zweite Kupplungshydraulikkreis (50) direkt mit der Hydraulikpumpe (22) verbunden ist.

3. Doppelkupplungsaktuator (20) nach Anspruch 1, **dadurch gekennzeichnet, dass** ein zweiter Schalthydraulikkreis (60) bereitgestellt ist, der mit der Hydraulikpumpe (22) verbunden ist, und dass der zweite Kupplungshydraulikkreis (50) mit einer Rücklaufverbindung (66) eines Steuerventils (62) des zweiten Schalthydraulikkreises (60) verbunden ist, mit dem der Druck in dem zweiten Schalthydraulikkreis (60) gesteuert wird.

4. Doppelkupplungsaktuator (20) nach Anspruch 3, **dadurch gekennzeichnet, dass** ein Drucksensor (34, 64) für jeden der ersten und zweiten Schalthydraulikkreise (30, 60) bereitgestellt ist und die ersten und zweiten Kupplungshydraulikkreise (40, 50), die mit der Rücklaufverbindung (36, 66) der Steuerventile (32, 62) der ersten und zweiten Hydraulikkreise (40, 50) verbunden sind, keinen eigenen Drucksensor aufweisen.

5. Doppelkupplungsaktuator (20) nach Anspruch 3, **dadurch gekennzeichnet, dass** ein Drucksensor (34, 64) für jeden der ersten und zweiten Schalthydraulikkreise (30, 60) bereitgestellt ist und ein Drucksensor (44, 54) auch für jeden der ersten und zweiten Kupplungshydraulikkreise (40, 50) bereitgestellt ist, die mit der Rücklaufverbindung (36, 66) der Steuerventile (32, 62) der ersten und zweiten Schalthydraulikkreise (30, 60) verbunden sind.

6. Doppelkupplungsaktuator (20) nach einem der vorhergehenden Ansprüche, **dadurch gekennzeichnet, dass** ein Behälter (26) integriert ist, der mittels einer Trennwand in zwei Teilvolumina unterteilt ist, wobei die Hydraulikpumpe (22) zwei Eingänge aufweist und die Rücklaufverbindung (46) des Steuerventils (42) des ersten Kupplungshydraulikkreises (40) in das Teilvolumen führt, aus dem die Hydraulikpumpe (22) ansaugt, um den ersten Kupplungshydraulikkreis (40) zu versorgen, und die Rücklaufverbindung (56) des Steuerventils (52) des zweiten Kupplungshydraulikkreises (50) in das Teilvolumen führt, aus dem die Hydraulikpumpe (22) ansaugt, um den zweiten Kupplungshydraulikkreis (50) zu versorgen.

7. Doppelkupplungsaktuator (20) nach einem der vorhergehenden Ansprüche, **dadurch gekennzeichnet, dass** ein Sperrdifferentialhydraulikkreis (70) mit einem Steuerventil (72) mit der Rücklaufverbindung (46) des Steuerventils (42) des ersten Kupplungshydraulikkreises (40) verbunden ist.

8. Antriebsanordnung für eine Fahrzeugachse eines Kraftfahrzeugs, das einen Elektromotor (1), ein Getriebe (3) mit einem Eingang, der mit dem Elektromotor (1) verbunden ist, einen ersten und einen zweiten Gang und eine Ausgangswelle, eine Doppelkupplung (2), die zwischen dem Elektromotor (1) und dem Eingang des Getriebes (3) angeordnet ist, eine Synchronisierungsanordnung (10), die zwischen dem ersten Gang und dem Ausgang des Getriebes (3) angeordnet ist, und einen Doppelkupplungsaktuator (20) nach einem der vorhergehenden Ansprüche aufweist, wobei der erste Schalthydraulikkreis (30) mit der Synchronisierungsanordnung (10) des ersten Gangs gekoppelt ist.

9. Antriebsanordnung nach Anspruch 8, **dadurch gekennzeichnet, dass** eine zweite Synchronisierungsanordnung bereitgestellt ist, die zwischen dem zweiten Gang und dem Ausgang des Getriebes angeordnet ist.

10. Antriebsanordnung nach einem der Ansprüche 8 und 9, **dadurch gekennzeichnet, dass** ein Aktuator (12) der Synchronisierungsanordnung einen mechanischen Anschlag zum Aufnehmen einer Stützkraft bei Betriebsdruck aufweist.

11. Antriebsanordnung nach einem der Ansprüche 8 bis 10, **dadurch gekennzeichnet, dass** eine Parksperre (14) integriert ist, die mit dem Schalthydraulikkreis (30, 60) verbunden ist.

12. Antriebsanordnung nach einem der Ansprüche 8 bis 10, **dadurch gekennzeichnet, dass** eine Parksperre (14) integriert ist, die mit dem ersten Schalthydraulikkreis (30) verbunden ist, mit dem auch gleichzeitig die Synchronisierungsanordnung (10) des ersten Gangs verbunden ist.

13. Antriebsanordnung nach einem der Ansprüche 8 bis 12, **dadurch gekennzeichnet, dass** ein Sperrdifferential bereitgestellt ist, das durch einen Sperrdifferentialhydraulikreise (70) betätigt werden kann, der in den Aktuator (20) integriert ist.

## Revendications

1. Actionneur (20) de double embrayage doté d'une pompe hydraulique (22), d'un premier circuit hydraulique (40) d'embrayage, d'un second circuit hydraulique (50) d'embrayage, le premier circuit hydraulique (40) d'embrayage étant doté d'une vanne (42) de commande, le second circuit hydraulique (50) d'embrayage étant relié à la pompe hydraulique (22) et étant lui-même doté d'une vanne (52) de commande, **caractérisé en ce que** l'actionneur (20) de double embrayage comporte en outre un premier circuit hydraulique (30) de changement, le premier circuit hydraulique (30) de changement étant relié à la pompe hydraulique (22) et doté d'une vanne (32) de commande qui possède un raccordement (36) de retour, le premier circuit hydraulique (40) d'embrayage étant relié au raccordement (36) de retour de la vanne (32) de commande du premier circuit hydraulique (30) de changement.

2. Actionneur (20) de double embrayage selon la revendication 1, **caractérisé en ce que** le second circuit hydraulique (50) d'embrayage est relié directement à la pompe hydraulique (22).

3. Actionneur (20) de double embrayage selon la revendication 1, **caractérisé en ce qu'**un second circuit hydraulique (60) de changement est installé, qui est relié à la pompe hydraulique (22) et **en ce que** le second circuit hydraulique (50) d'embrayage est relié à un raccordement (66) de retour d'une vanne (62) de commande du second circuit hydraulique (60) de changement avec laquelle la pression dans le second circuit hydraulique (60) de changement est régulée.

4. Actionneur (20) de double embrayage selon la revendication 3, **caractérisé en ce qu'**un capteur (34, 64) de pression est installé pour chacun des premier et second circuits hydrauliques (30, 60) de changement et **en ce que** les premier et second circuits hydrauliques (40, 50) d'embrayage reliés au raccordement (36, 66) de retour des vannes (32, 62) de commande des premier et second circuits hydrauliques (40, 50) ne sont pas dotés de leur propre capteur de pression.

5. Actionneur (20) de double embrayage selon la revendication 3, **caractérisé en ce qu'**un capteur (34, 64) de pression est installé pour chacun des premier et second circuits hydrauliques (30, 60) de changement et **en ce qu'**un capteur (44, 54) de pression est également installé pour chacun des premier et second circuits hydrauliques (40, 50) d'embrayage reliés au raccordement (36, 66) de retour des vannes (32, 62) de commande des premier et second circuits hydrauliques (30, 60) de changement.

6. Actionneur (20) de double embrayage selon l'une des revendications précédentes, **caractérisé en ce qu'**un réservoir (26) est intégré, qui est divisé en deux volumes partiels au moyen d'une cloison séparatrice, la pompe hydraulique (22) comprenant deux entrées et le raccordement (46) de retour de la vanne (42) de commande du premier circuit hydraulique (40) d'embrayage aboutissant dans le volume partiel à partir duquel la pompe hydraulique (22) aspire pour alimenter le premier circuit hydraulique (40) d'embrayage et le raccordement (56) de retour de la vanne (52) de commande du second circuit hydraulique (50) d'embrayage aboutissant dans le volume partiel à partir duquel la pompe hydraulique (22) aspire pour alimenter le second circuit hydraulique (50) d'embrayage.

7. Actionneur (20) de double embrayage selon l'une des revendications précédentes, **caractérisé en ce qu'**un circuit hydraulique (70) de différentiel à blocage muni d'une vanne (72) de commande est relié au raccordement (46) de retour de la vanne (42) de commande du premier circuit hydraulique (40) d'embrayage.

8. Ensemble d'entraînement pour essieu de véhicule d'un véhicule à moteur doté d'un moteur électrique (1), d'une boîte (3) de vitesses dotée d'une entrée qui est reliée au moteur électrique (1), d'un premier et d'un second engrenage et d'un arbre de sortie, d'un double embrayage (2) qui est disposé entre le moteur électrique (1) et l'entrée de la boîte (3) de vitesses, d'un ensemble (10) de synchronisation qui est disposé entre le premier engrenage et la sortie de la boîte (3) de vitesses et d'un actionneur (20) de double embrayage selon l'une des revendications précédentes, le premier circuit hydraulique (30) de changement étant couplé avec l'ensemble (10) de synchronisation du premier engrenage.

9. Ensemble d'entraînement selon la revendication 8, **caractérisé en ce qu'**un second ensemble de synchronisation est installé, qui est disposé entre le second engrenage et la sortie de la boîte de vitesses.

10. Ensemble d'entraînement selon l'une des revendications 8 et 9, **caractérisé en ce qu'**un actionneur (12) de l'ensemble de synchronisation est doté d'une butée mécanique pour recevoir une force de soutien à la pression de fonctionnement.

11. Ensemble d'entraînement selon l'une des revendications 8 à 10, **caractérisé en ce qu'**un verrou (14) de stationnement est intégré, qui est relié au circuit hydraulique (30, 60) de changement.

12. Ensemble d'entraînement selon l'une des revendications 8 à 10, **caractérisé en ce qu'**un verrou (14) de stationnement est intégré, qui est relié au premier circuit hydraulique (30) de changement auquel l'ensemble (10) de synchronisation du premier engrenage est également simultanément relié.

13. Ensemble d'entraînement selon l'une des revendications 8 à 12, **caractérisé en ce qu'**un différentiel à blocage est installé, qui peut être actionné par un circuit hydraulique (70) de différentiel à blocage qui est intégré dans l'actionneur (20).
